(19) Europäisches Patentamt

European Patent Office

Office européen des brevets

(11) **EP 1 605 191 A2**

(12) **EUROPÄISCHE PATENTANMELDUNG**

(43) Veröffentlichungstag:
   **14.12.2005 Patentblatt 2005/50**

(51) Int Cl.⁷: **F16H 61/00**

(21) Anmeldenummer: **05020198.7**

(22) Anmeldetag: **10.04.2003**

(84) Benannte Vertragsstaaten:
   **AT BE BG CH CY CZ DE DK EE ES FI FR GB GR
   HU IE IT LI LU MC NL PT RO SE SI SK TR**
   Benannte Erstreckungsstaaten:
   **AL LT LV MK**

(30) Priorität: **10.04.2002 DE 10215715
   15.04.2002 DE 10216544
   16.05.2002 DE 10221700**

(62) Dokumentnummer(n) der früheren Anmeldung(en)
   nach Art. 76 EPÜ:
   **03727192.1 / 1 499 900**

(71) Anmelder: **LuK Lamellen und Kupplungsbau
   Beteiligungs KG
   77815 Bühl (DE)**

(72) Erfinder:
   • **Bitzer, Franz, Dr.
     88048 Friedrichshafen (DE)**
   • **Vornehm, Martin
     77815 Bühl (DE)**
   • **Lauinger, Christian, Dr.
     76532 Baden-Baden (DE)**
   • **Reuschel, Michael
     77833 Ottersweier (DE)**
   • **Späth, Christian
     76534 Baden-Baden-Steinbach (DE)**
   • **Angele, Christoph
     80634 München (DE)**
   • **Pfund, Thomas
     76547 Leiberstung (DE)**
   • **Linnenbrügger, André, Dr.
     77815 Bühl (DE)**

Bemerkungen:
   Diese Anmeldung ist am 16-09-2005 als
   Teilanmeldung zu der unter INID-Kode 62
   erwähnten Anmeldung eingereicht worden.

(54) **Verfahren zum Bestimmen der Drehzahl eines Bauteils, zum Feststellen des Rutschens eines CVT-Getriebes und zur Steuerung eines CVT-Getriebes sowie Kegelscheibenumschlingungsgetriebe**

(57)   Die Eingangsdrehzahl eines Kegelscheibenumschlingungsgetriebes wird dadurch bestimmt, dass eine Raddrehzahl und die Getriebeübersetzung gemessen werden und die eingangs Drehzahl daraus errechnet wird. Zum Feststellen des Rutschens eines CVT-Getriebes wird die Änderungsgeschwindigkeit der Übersetzung herangezogen oder ein akustischer Parameter des Getriebes verwendet. Im Fluidsteuersystem wird ein Ventil verwendet, dessen Öffnungsquerschnitt abhängig von der einem Differenzdruck gesteuert wird. Zur Beölung der Kegelscheiben werden Spritzlöcher eines Spritzrohrs verwendet, das eine in einer an einem Trum eines Umschlingungsmittels eines Kegelscheibenumschlingungsmittels anliegenden Gleitschiene ausgebildete Nut durchdringt.

Fig. 1

EP 1 605 191 A2

**Beschreibung**

Die Erfindung betrifft ein Verfahren zum Bestimmen der Drehzahl eines Bauteils aus einer Mehrzahl von in einem drehschwingungsanfälligen System enthaltenen, bezüglich ihrer Drehbarkeit gekoppelten Bauelementen. Die Erfindung betrifft weiter ein Verfahren zum Feststellen des Rutschens eines CVT-Getriebes und ein Verfahren zur Steuerung eines CVT-Getriebes. Zusätzlich betrifft die Erfindung ein Kegelscheibenumschlingungsgetriebe.

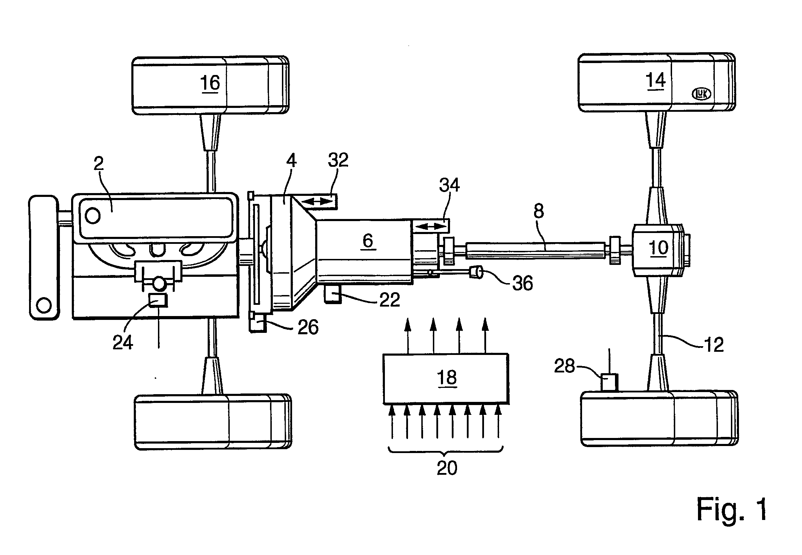

In Kraftfahrzeugen werden aus Komfortgründen und aus Gründen verminderten Kraftstoffverbrauches zunehmend Getriebe mit kontinuierlich veränderbarer Übersetzung, sogenannte CVT-Getriebe (beispielsweise Kegelscheibenumschlingungsgetriebe, Reibradgetriebe usw.) eingesetzt, die von einem Steuergerät derart angesteuert werden, dass sich je nach Betätigung eines Fahrpedals oder dem eingebbaren Wunsch des Fahrers einerseits ein zufriedenstellendes dynamisches Verhalten des Kraftfahrzeugs ergibt und andererseits mit geringem Kraftstoffverbrauch gefahren wird. Fig. 1 zeigt ein Beispiel eines Fahrzeugsantriebsstrangs.

Ein Kraftfahrzeug weist einen Motor 2 auf, der im dargestellten Beispiel über eine Kupplung 4 und ein Getriebe 6 mit einer Kardanwelle 8 verbunden ist. Die Kardanwelle treibt über ein Differential 10 Antriebswellen 12, die drehfest mit Hinterrädern 14 verbunden sind. Die Vorderräder 16 sind im dargestellten Beispiel nicht dargestellt.

Ein elektronisches Steuergerät 18 mit einem Mikroprozessor und zugehörigen Speichereinrichtungen weist Eingänge 20 auf, die mit Sensoren verbunden sind. Als Sensoren sind beispielsweise ein Sensor 22 zur Erfassung der Drehzahl einer Getriebeeingangswelle, ein Drosselklappensensor 24, ein Motordrehzahlsensor 26, ein Raddrehzahlsensor 28 und gegebenenfalls weitere Sensoren vorhanden. Ausgänge des Steuergerätes 18 sind mit einer Kupplungsbetätigungseinrichtung 32 und einer Getriebebetätigungseinrichtung 34 verbunden, sowie gegebenenfalls mit weiteren Aktoren des Antriebsstrangs, wie einem Drosselklappensteller usw.

Das Getriebe 6 ist im dargestellten Beispiel ein CVT-Getriebe, dessen Betätigungseinrichtung 34 hydraulisch angesteuert wird. Mit einem Wählhebel 36 lassen sich eine Rückwärtsfahrstufe sowie verschiedene Fahrprogramme aktivieren.

Im praktischen Betrieb solcher mit CVT-Getrieben ausgerüsteten Antriebsstränge treten verschiedene Probleme auf, deren Lösung für einen komfortablen und über lange Betriebszeiten zuverlässigen Einsatz des CVT-Getriebes wichtig ist. Beispielsweise ist es für die Steuerung- bzw. Regelung des CVT-Getriebes wichtig, die Drehzahl seiner Eingangswelle genau zu kennen. Die Benutzbarkeit eines unmittelbar an der Eingangswelle erfassten Eingangsdrehzahlsignals für die Steuerungs- oder Regelung beispielsweise der Übersetzung des CVT-Getriebes ist begrenzt, da die Eingangsdrehzahl im Antriebsstrang vorhandene Schwingungen aufweisen kann. Weiter ist es aus vielerlei Gründen erforderlich, ein Rutschen des mit Reibschluss arbeitenden CVT-Getriebes zu erkennen, um bleibende Schäden abzuwenden. Auch die Übersetzungsverstellung ist insbesondere bei Kegelscheibenumschlingungsgetrieben, deren Kegelscheibenpaare jeweils nur einen Druckraum zur Anpressung und Verstellung aufweisen, mit Problemen behaftet.

Der Erfindung liegt die Aufgabe zugrunde, Abhilfe für die vorgenannten, in der Praxis auftauchenden Probleme zu schaffen.

Eine Lösung der Aufgabe, die Drehzahl eines Bauteils aus einer Mehrzahl von in einem drehschwingungsanfälligen System enthaltenen, bezüglich ihrer Drehbarkeit gekoppelten Bauelementen zu bestimmen, wird dadurch erreicht, dass die Drehzahl eines in oder an einem Schwingungsknoten angeordneten Bauelements gemessen wird und die Drehzahl des Bauteils aus der gemessenen Drehzahl und der Übersetzung zwischen dem Bauelement und dem Bauteil berechnet wird.

Wenn zwei Bauelemente auf zwei verschiedenen Seiten eines Schwingungsknotens angeordnet sind, ist es vorteilhaft, den Mittelwert der Drehzahlen der Bauelemente für die Berechnung der Drehzahl des Bauteils zu verwenden.

Vorteilhafterweise wird das vorstehend geschilderte Verfahren zur Bestimmung der Eingangsdrehzahl eines in einem Antriebsstrang eines Fahrzeugs enthaltenen CVT-Getriebes verwendet, wobei die Drehzahl wenigstens eines, über das CVT-Getriebe angetriebenen Rades gemessen wird und die Eingangsdrehzahl aus der Übersetzung des CVT-Getriebes sowie gegebenenfalls weiterer Übersetzungen zwischen dem Ausgang des CVT-Getriebes und dem Rad errechnet wird.

Vorteilhaft ist, die wenigstens eine Raddrehzahl sowie die Eingangsdrehzahl und die Ausgangsdrehzahl des CVT-Getriebes zu messen und die aus den gemessenen Größen sowie gegebenenfalls weiteren Übersetzungen zwischen dem Ausgang des CVT-Getriebes und dem Rad errechnete Getriebeeingangsdrehzahl zur Steuerung und/oder Regelung von Komponenten des Antriebsstrangs zu verwenden.

Vorteilhaft werden eine gemessenen und die errechnete Getriebeeingangsdrehzahl in einer vorbestimmten Gewichtung zur Steuerung und/oder Regelung von Komponenten des Antriebsstrang verwendet.

Die Gewichtung hängt zweckmäßigerweise von der Übersetzung des CVT-Getriebes ab.

Ein Verfahren zum Feststellen des Rutschens eines CVT-Getriebes zeichnet sich dadurch aus, dass die Änderungsgeschwindigkeit der Übersetzung ermittelt wird und die ermittelte Änderungsgeschwindigkeit mit einer vorbestimmten, aus Betriebsparametern des CVT-Getriebes berechneten Änderungsgeschwindigkeit verglichen wird und als Rutschen festgestellt wird, wenn die ermittelte Änderungsgeschwindigkeit über ein vorbestimmtes Maß hinaus von der errechneten Änderungsgeschwindigkeit abweicht.

Vorteilhafterweise ist ein Maximalwert der berechneten Änderungsgeschwindigkeit proportional zu $1/\text{Übersetzung}^n$ , wobei n einen Wert zwischen 1,5 und 2 hat, und als Rutschen festgestellt wird, wenn die ermittelte Änderungsgeschwindigkeit den Maximalwert über ein vorbestimmtes Maß hinaus übersteigt.

Ein weiteres Verfahren zum Feststellen des Rutschens eines CVT-Getriebes zeichnet sich dadurch aus, dass wenigstens ein Wert eines sich beim Rutschen ändernden akustischen Parameters des CVT-Getriebes gespeichert wird, der akustische Parameter gemessen wird und als Rutschen oder sich andeutendes Rutschen festgestellt wird, wenn der gemessene Parameter sich den gespeicherten Wert in vorbestimmter Weise annähert.

*Bei einem vorteilhaften Verfahren zum Feststellen des Rutschens eines CVT-Getriebes, wird die zeitliche Änderung der Abtriebsdrehzahl des Getriebes ermittelt und als sich zumindest ankündigendes Rutschen gewertet, wenn die zeitliche Änderung der Abtriebsdrehzahl einen vorbestimmten Grenzwert übersteigt.*

*Ein weiteres, vorteilhaftes Verfahren zum Feststellen des Rutschens eines CVT-Getriebes, zeichnet sich dadurch aus, dass die zeitliche Änderung der auf wenigstens eine der Radbremsen eines mit dem CVT-Getriebe versehenen Fahrzeugs wirkende Kraft ermittelt wird und als sich zumindest ankündigendes Rutschen gewertet wird, wenn die zeitliche Änderung der Kraft einen vorbestimmten Grenzwert übersteigt.*

*Vorteilhafterweise wird bei Feststellung eines Rutschens oder eines sich ankündigenden Rutschens eine Stellgröße des CVT-Getriebes derart verstellt, dass einem Rutschen entgegengewirkt wird.*

Ein Verfahren zur Steuerung eines CVT-Getriebes mit einem zwei Kegelscheibenpaare umschlingenden Umschlingungsmittel, wobei jedes Kegelscheibenpaar einen einzigen mit Fluiddruck beaufschlagten Druckraum zur Einstellung des Anpressdruckes zwischen dem Kegelscheibenpaar und dem Umschlingungsmittel sowie zur Übersetzungsverstellung des CVT-Getriebes aufweist, zeichnet sich dadurch aus, dass der Öffnungsquerschnitt eines in den Fluidanschlussleitungen der Druckräume enthaltenen Steuerventils abhängig von einer für eine vorbestimmte Änderungsgeschwindigkeit der Übersetzung erforderlichen Differenz zwischen den in den Druckräumen herrschenden Fluiddrucken vorgesteuert wird.

Ein Kegelscheibenumschlingungsgetriebe mit zwei Kegelscheibenpaaren mit je zwei, in ihrem Abstand veränderbaren Kegelscheiben, einem die Kegelscheiben umschlingenden Umschlingungsmittel, einer ein Trum des Umschlingungsmittels führenden Gleitschiene, die auf ihrer dem anderen Trum zugewandten Seite wenigstens eine parallel zu dem Umschlingungsmittel verlaufende, sich von den ändernde Gleitschiene zu deren Mitte verdickende Rippe aufweist, und einem im Bereich der Mitte der Rippe angeordneten, etwa senkrecht zu einer Ebene, in der das Umschlingungsmittel umläuft, verlaufendes Rohr zum Sprühen von Flüssigkeit wenigstens in die Räume zwischen den Kegelscheiben der Kegelscheibenpaare, ist vorteilhafterweise derart ausgebildet, dass die Rippe an ihrer dem anderen Trum zugewandten Oberfläche im Bereich ihrer Mitte eine Nut derart aufweist, dass aus in dem die Nut durchquerenden Rohr ausgebildeten Löchern abgespritzte Flüssigkeit unmittelbar in die Räume zwischen den Kegelscheiben gelangt.

Das Rohr enthält bevorzugt wenigstens ein weiteres Loch, aus dem abgespritzte Flüssigkeit unmittelbar auf das andere Trum gelangt.

Die Erfindung, die für CVT-Getriebe unterschiedlichster Bauart in unterschiedlichsten Anwendungen anwendbar ist, wird im folgenden anhand von Beispielen genauer erläutert.

Eine weitere vorteilhafte Ausgestaltung des erfindungsgemäßen Verfahrens betrifft eine Bewertung von Rutschereignissen, die detektiert und beispielsweise in einem Steuergerät des Fahrzeugs festgehalten bzw. gespeichert werden. Dabei wird vorteilhafterweise die Leistung eines Rutschereignisses berechnet und abhängig davon, ob die Leistung einen bestimmten Grenzewert überschreitet ein Fehlereintrag ins Steuergerät vorgenommen. Tests haben gezeigt, dass nicht jedes Rutschereignis zu einer Schädigung der Oberfläche der Variatorscheiben beziehungsweise der Wiegestükke der Kette führt. Auch hat sich gezeigt, dass Schädigungen mit höherer Leistung noch keine Dauerschädigung herbeiführen müssen, so dass ein oder mehrere Grenzwerte eingeführt werden können und zwar bezüglich der Leistung eines Rutschereignisses sowie der Häufigkeit. Nachfolgend kann im Fahrzeug direkt oder in einer Werkstatt eine entsprechende Beurteilung erfolgen.

Die zeitabhängige Leistung P eines Rutschereignisses kann beispielsweise nach

$$P = M \times \Delta\omega$$

mit dem am Variator anliegenden Moment M, das beispielsweise aus einem Drucksensor für den Anpressdruck ermittelt werden kann, und der Differenzwinkelgeschwindigkeit $\Delta\omega$, die aus der Überhöhung der Variatorübersetzung während eines Rutschereignisses ermittelt werden kann, zwischen der schlupfenden Kette und dem Variator angegeben werden.

Vorteilhafterweise wird der Maximalwert der so bestimmten Leistung P für Vergleichsfälle herangezogen, es kann jedoch auch vorteilhaft sein andere Größen wie das Leistungsintegral über die Zeit oder statistisch angenäherte Werte zu verwenden. Der Einsatz exakterer Methoden als die Auswertung des Maximalwert kann dann erfolgen, wenn dies durch die Prozessorsleistung des Steuergeräts ermöglicht wird.

Es hat sich gezeigt, dass eine Klassifizierung der Leistungen der Rutschereignisse in Leistungsbereiche vorteilhaft ist, beispielsweise können Leistungen von bis zu 5.10 kW als leichte und darüber liegende Werte als schwere Schädigungen klassifiziert werden. Dabei kann die Anzahl der Rutschereignisse entsprechend dieser Klassifizierung in einen Fehlerspeicher eingetragen werden. Dabei kann ein Fehlerzähler integrierend in der Weise eingesetzt werden, die Rutschereignisse gewichtet und aufsummiert werden. Eine Wichtung der Fehler kann ebenfalls durch eine Vorschädigung erfolgen, da ein ein auf eine Schädigung folgendes Rutschereignis sich gravierender auswirken kann als auf ein nicht geschädigtes Getriebe. Der Fehlerzähler kann in Abhängigkeit von im Getriebe verwendeten Werkstoffen und deren Beschaffenheit wie Variatoroberflächen, von der Leistung der Brennkraftmaschine, dem verwendeten Getriebeöl und dergleichen dimensioniert werden. Bei Überschreitung eines Grenzwerts im Fehlerzähler kann der Fahrer gewarnt werden, beispielsweise ein- oder mehrstufig von einer einfachen Anzeige über eine Aufforderung zum Aufsuchen einer Werkstatt bis Zwangsabschaltung des Fahrzeugs zum Schutz vor weiter gehenden Schäden.

In den beigefügten Figuren zeigen:

Fig. 1    einen bereits erläuterten Antriebsstrang eines Fahrzeugs,

*Fig. 2    Kurven zur Erläuterung einer Früherkennung von Rutschen,*

Fig. 3    ein Schema einer hydraulischen Ansteuerung eines Kegelscheibenumschlingungsgetriebes,

Fig. 4    Vorsteuerkennlinien für die Öffnung eines Ventils,

Fig. 5    eine Seitenansicht eines Kegelscheibenumschlingungsgetriebes und

Fig. 6    eine perspektivische Ansicht auf einen Teil einer Führungsschiene.

Es sind Verfahren bekannt, bei denen die Regelung des Getriebes 6, die in dem Steuergerät 18 oder in dezentralen weiteren Steuergeräten implementiert ist, auf einer Regelung der Eingangsdrehzahl des Getriebes 6 beruht. Wenn die Getriebeeingangsdrehzahl unmittelbar gemessen wird, finden sich in dem Messsignal Ruckel- und Rupffrequenzen. Diese Frequenzen wirken auf die Übersetzungsregelung als Störung und stehen einem guten Einregeln der Führungsgröße im Weg. Im Extremfall kann es zu Rückkopplungen kommen, die ein Aufschwingen der Übersetzungsregelung bewirken. Aus diesem Grund ist ein Signal wünschenswert, das derartige Schwingungen nicht oder nur in verminderter Form aufweist. Eine starke Filterung mit hohen Zeitkonstanten, die eine Glättung bewirkt, ist aufgrund der dann deutlich verminderten Dynamik nicht zulässig.

Eine Lösung dieses Problems liegt in der Messung einer wenig schwingungsanfälligen Drehzahl an einer Stelle, die aus schwingungstechnischer Sicht einen Schwingungsknoten bildet oder die nahe einem solchen Knoten angeordnet ist.

Ein Antriebsstrang mit einem Motor, einem Getriebe und einem über einen Reifen mit einer Straße gekoppelten Fahrzeugrad, wobei die Bauteile über Wellen miteinander verbunden sind, stellt ein drehschwingungsfähiges System dar. Dabei können Motor und Getriebe gegen Fahrzeugmasse schwingen, wobei die Eigenfrequenz typischerweise 7,1 Hertz beträgt und die Drehzahl zweiter Ordnung 212 $min^{-1}$ beträgt. In einem anderen Mode schwingt das Getriebe zwischen Motor und Fahrzeugmasse, wobei die Eigenfrequenz typischerweise 19,8 Hertz beträgt und die Drehzahl zweiter Ordnung bei 593 $min^{-1}$ liegt. In einem anderen Mode schwingt das Rad zwischen Getriebe und Fahrzeugmasse. Die Eigenfrequenz beträgt dann typischerweise 47,9 Hertz und die Drehzahl zweiter Ordnung liegt bei 1.436 $min^{-1}$. In einem weiteren Mode schwingt der Getriebeeingang zwischen Motor und dem Rest des Antriebsstrangs mit einer Eigenfrequenz von typischerweise 71,4 Hertz, was einer Drehzahl zweiter Ordnung von 2.143 $min^{-1}$ entspricht. Im Falle eines Kegelscheibenumschlingungsgetriebes kann die Übersetzung des Variators (Kegelscheibenpaare mit Umschlingungsmittel) durch Messung der Drehzahl des ersten Kegelscheibenpaares und des zweiten Kegelscheibenpaares berechnet werden. Da der Variator aus schwingungstechnischer Sicht sehr steif ist, finden sich in der berechneten Übersetzung keine Ruckel- bzw. Rupffrequenzen. Die Raddrehzahl kann vorteilhafter Weise einem ABS-Steuergerät entnommen werden, dem unmittelbar am Rad abgegriffene Drehzahlsignale zugeführt werden. Wichtig ist, dass die Raddrehzahl unmittelbar am Rad und nicht am Getriebeausgang, beispielsweise am Beginn einer Antriebswelle 12 (Fig. 1) erfasst wird, da die dortige Drehzahl ebenfalls Ruckelfrequenzen aufweist.

Aus der gemessenen Raddrehzahl und der gemessenen Getriebeübersetzung sowie weiteren Übersetzungsstufen des Antriebsstrangs, im dargestellten Beispiel der Übersetzung des Differentials 10, kann die Getriebeeingangsdrehzahl $n_b$ aus der Beziehung berechnet werden:

$$(1) \qquad n_b = i_{CVT} \cdot i_D \cdot n_R,$$

wobei $i_{CVT}$ die Übersetzung des CVT-Getriebes ist, $i_D$ die Übersetzung des Differentials ist und $n_R$ die Raddrehzahl ist.

Es versteht sich, dass weitere Übersetzungen dazukommen, wenn zwischen dem Eingangsscheibensatz des CVT-Getriebes und dessen Eingangswelle oder an anderer Stelle sich noch weitere Übersetzungsstufen befinden.

Sollte sich ein Schwingungsknoten zwischen zwei Messstellen befinden, so kann durch Mittelwertbildung der beidseitig der Schwingungsknotens gemessenen Drehzahlen ein schwingungsfreies Drehzahlsignal erzeugt werden.

Mit dem geschilderten Verfahren wird die Unempfindlichkeit der Übersetzungsregelung gegenüber Triebsstrangschwingungen verbessert. Die Gefahr eines Aufschwingens bei hohen Reglerverstärkungen ist deutlich vermindert. Durch die entsprechend höhere zulässige Reglerverstärkung kann das Führungsverhalten verbessert werden.

Das geschilderte Verfahren kann bei allen Arten von stufenlosen Getrieben eingesetzt werden, wie Reibradgetrieben, Kegelscheibenumschlingungsgetrieben beispielsweise in Geared Neutral Bauweise oder in I2-Struktur usw. Solche CVT-Getriebe können insbesondere bei Verstellung ihrer Übersetzung eine Anregungsquelle von Ruckelschwingungen sein, Ruckelschwingungen verstärken oder dämpfen oder in ihrer Funktion selbst durch Ruckelschwingungen beeinträchtigt werden.

Die Übersetzung eines Kegelscheibenumschlingungsgetriebes wird durch Änderung der Anpresskräfte zwischen den Kegelscheibenpaaren und dem Umschlingungsmittel verstellt. Diese Veränderung erfolgt über Ansteuerung von Hydraulikventilen, die entsprechende Drücke einstellen. Aufgrund des komplexen Verstellverhaltens von Umschlingungsgetrieben (abhängig von Drehzahl, Drehmoment, Übersetzung und den Anpresskräften selbst) kommen Regelkreise zum Einsatz, bei denen beispielsweise aus gemessenen Drehzahlen eine Ist-Übersetzung errechnet wird und aus der aktuellen Fahrsituation (Geschwindigkeit, Fahrpedalbetätigung usw.) eine Soll-Übersetzung errechnet wird. Weiter sind Regler bekannt, bei denen die Ist-Drehzahl des Getriebeeingangs gemessen wird und eine Soll-Drehzahl aus der aktuellen Fahrsituation bestimmt wird. Ebenfalls bekannt ist, dass diese Regler nicht nur möglichst schnell der Soll-Ist-Abweichung entgegenwirken, sondern dabei auch die Ist-Veränderung der Drehzahl durch eine der aktuellen Fahrsituation entsprechende Soll-Veränderung der Drehzahl zu begrenzen. Dadurch werden die bei der Verstellung freigesetzten dynamischen Momente in Komfort steigernder Weise begrenzt.

Wenn als die dem Regler zugeführte Ist-Eingangsdrehzahl des Getriebes nicht unmittelbar die gemessene Ist-Eingangsdrehzahl verwendet wird, sondern, wie vorstehend erläutert, in einem ersten Schritt aus den gemessenen Drehzahlen am Getriebeeingang und am Getriebeausgang die Übersetzung des Getriebes errechnet wird und dann aus dieser Übersetzung und der gemessenen Drehzahl eines angetriebenen Rades die Drehzahl am Getriebeeingang berechnet wird, hat dies den Vorteil, dass keine spezielle Abstimmung von Bandpassfiltern auf die von der Übersetzung abhängige Ruckelfrequenz notwendig ist. Durch Isolation und Dämpfung von Ruckelschwingungen kann der Komfort und die Regelungsgüte der CVT-Regelung verbessert werden.

Vorteilhaft ist, das vorstehend beschriebene Verfahren derart weiterzubilden, dass als Eingangsgröße für einen Regler zur Einstellung der Übersetzung des CVT-Getriebes eine Eingangsdrehzahl $n_E$ des Getriebes zu verwenden, die entsprechend der nachfolgenden Formel bestimmt wird:

$$(2)\ n_E = \alpha \times n_b + (1-\alpha) \times n_g,$$

wobei

$n_b$ die entsprechend der Formel (1) berechnete Eingangsdrehzahl, $n_g$ die unmittelbar gemessene Getriebeeingangsdrehzahl $n_g$ und $\alpha$ ein Gewichtungsfaktor ist. Bei $\alpha=0$ wird lediglich die gemessene Getriebeeingangsdrehzahl, die ruckelbehaftet ist, zur Regelung verwendet. Bei $\alpha=1$ wird die ruckelentkoppelte berechnete Eingangsdrehzahl $n_b$ verwendet. Bei $\alpha > 1$ entsteht eine Gegenkopplung durch den Regler; bei Werten von $\alpha <$ 0 entsteht eine Mitkopplung durch den Regler; bei Zwischenwerten entsteht eine "Teil-Entkopplung". Je nach Reglerstruktur kann also durch geeignete Wahl von $\alpha$ die CVT-Verstellung derart moduliert werden, dass Ruckelschwingungen gedämpft werden.

Erfindungsgemäß kann der Regler mit einem festen Wert von $\alpha$ implementiert sein. Vorteilhaft ist, den Wert von $\alpha$ von der aktuellen Übersetzung abhängig zu machen, da Ruckelschwingungen in isolierten Übersetzungsbereichen auftreten können. Die erforderliche Größe von $\alpha$ kann aus dem Auftreten von Ruckelschwingungen abgeleitet werden. Die Erkennung des Auftretens von Ruckelschwingungen kann unter Verwendung von Filtern erfolgen.

Ein weiteres, beim Betrieb von stufenlosen Getrieben immer wieder vorkommendes Problem liegt darin, dass die Anpresskraft zwischen den in Reibschluss befindlichen Übertragungsteilen nicht ausreicht, das anliegende Drehmoment zu übertragen, so dass es zu einem Rutschen kommt, wodurch das Getriebe irreversibel geschädigt werden kann. Eine Rutschdetektion kann nicht, wie dies beispielsweise bei Kupplungen üblich ist, lediglich durch Auswertung von Differenzdrehzahlen erfolgen, da in einem CVT-Getriebe aufgrund der variablen Übersetzung kein festes Drehzahlverhältnis vorliegt.

Erfindungsgemäß erfolgt eine Rutschdetektion unter Zuhilfenahme des Übersetzungsgradienten. CVT-Getriebe haben eine endliche Verstellgeschwindigkeit, d. h. für eine Übersetzungsänderung ist jeweils eine gewisse Zeitdauer erforderlich. Findet eine Übersetzungsänderung mit einer größeren Änderungsgeschwindigkeit statt als im rutschfreien Betrieb möglich, so kann auf ein Rutschen geschlossen werden.

Aufgrund der physikalischen Eigenschaften eines stufenlosen Getriebes nach dem Umschlingungsprinzip ist eine maximal mögliche Verstellgeschwindigkeit keine Konstante, sondern hängt von verschiedenen Parametern, wie Drehzahl, Drehmoment und augenblicklicher Übersetzung ab. Der stärkste Einfluß ist durch die augenblickliche Übersetzung gegeben. Theoretisch lässt sich abschätzen, dass die maximal mögliche Übersetzungsänderungsgeschwindigkeit proportional zu 1/Übersetzung$^n$ ist. Maximal zulässig ist ein Wert von n=2; geeignet sind Werte zwischen 1,5 und 2, vorteilhaft ist 1,7. Der zulässige Übersetzungsgradient ist in beiden Verstellrichtungen etwa gleich.

In der Praxis kann in einer vorgegebenen Übersetzung, beispielsweise bei maximalem underdrive, die maximal mögliche Verstellgeschwindigkeit ermittelt werden. Aufgrund der oben genannten Beziehung kann dann die maximale Verstellgeschwindigkeit für die anderen Übersetzungen berechnet werden, wobei zur Berechnung der aktuellen maximalen Verstellgeschwindigkeit Drehzahlen verwendet werden, die vor ihrer Verarbeitung gefiltert und mit einer anderen Abtastfrequenz nachgetastet werden. Ebenso können für die Getriebeübersetzung Filter und Nachtastalgorithmen verwendet werden.

Bei gewollt schnellen Übersetzungsänderungen können Verstellgradienten höher als ein Grenzkriterium liegen. Damit dies nicht zu einem ungewollten Fehlereintrag in einen Fehlerspeicher des Steuergerätes führt, wird die Rutschüberwachung in solchen Situationen abgeschaltet. Rutschereignisse mit geringem Verstellgradienten werden mit dem geschilderten Verfahren nicht erfasst. Rutschereignisse mit zunächst geringem Gradienten erreichen typischerweise jedoch beim Abbau des Schlupfes Verstellgeschwindigkeiten, die über dem Grenzkriterium liegen.

In Abänderung des geschilderten Verfahrens kann die Veränderung der Variatorübersetzung in einem mathematischen Modell abhängig von verschiedenen Betriebsparametern, wie der Motordrehzahl, der Getriebeeingangsdrehzahl, der Übersetzung, dem Eingangsmoment, der Temperatur und von Axialkräften berechnet werden. Im Betrieb sind die Größen bekannt, so dass anhand des mathematischen Modells die Verstelldynamik di/dt berechnet werden kann, wobei i die Getriebe- bzw. Variatorübersetzung ist. Weicht ein real gemessener Verstellgradient von der berechneten Änderungsgeschwindigkeit über ein vorbestimmtes Maß hinaus ab, so deutet dies auf ein Rutschen hin.

Vorteilhaft kann für die Verstelldynamik eine untere Grenze definiert werden, unterhalb der keine Auswertung erfolgt. Damit wird vermieden, dass bei nur kleinen zu erwartenden Verstellgradienten aufgrund möglicher numerischer Ungenauigkeiten irrtümlich ein Rutschen detektiert wird.

Aus Rechenzeitgründen kann das mathematische Modell dahingehend vereinfacht werden, dass nur die Haupteinflussparameter berücksichtigt werden. Bei einem Kegelscheibenumschlingungsgetriebe hängt die Verstelldynamik hauptsächlich von der Axialkraft und der Variatorübersetzung ab. Mit Axialkraft wird dabei nicht die Absolutkraft, sondern eine Kraftdifferenz zum stationären Betriebspunkt, der durch den statischen zeta Verlauf beschrieben wird, bezeichnet.

Für diese Kraftdifferenz gilt:

$$F_{diff} = F_{s1} - \xi x F_{s2};$$

dabei bezeichnet $\xi$ das Kraftverhältnis zwischen der Kraft am ersten Scheibenpaar und der Kraft am zweiten Scheibenpaar im stationären Betriebszustand an einer Übersetzung = $F_{s1\_stat}/F_{s2\_stat}$, wobei $F_{s1}$ bzw. $F_{s2}$ die jeweils aktuelle Kraft am ersten bzw. zweiten Scheibensatz.

Die Übersetzungsabhängigkeit kann durch einen Verstellkoeffizienten $k_i$ (der von der Übersetzung i und der Verstellrichtung abhängig ist), beschrieben werden, so dass sich die Verstelldynamik durch die Formel beschreiben lässt:

$$(3)\ di/dt = k_i \times (F_{s1} - \xi x\ F_{s2})$$

Der Wert $k_i$ kann in einer Kennlinie für die Hoch- bzw. Rückschaltung abgelegt werden.

In einem stufenlosen Getriebe kann berechnet bzw. gemessen werden, welche angelegte Kraft zu welcher Verstellung führt. Unter Berücksichtigung der aus (3) bekannten Verstelldynamik kann dann bestimmt werden, ob die Verstellung durch die angelegte Kraftdifferenz erfolgt oder durch andere Ereignisse (Rutscher) verursacht wurde.

Um eine Rutscherkennung noch sicherer zu machen und den Einfluss von Streuungen zu vermindern, kann in die Formel (3) ein Faktor von beispielsweise zwischen 1,5 und 3 eingefügt werden, um eine Obergrenze zu definieren, die für eine Rutscherkennung überschritten werden muss. Damit ist sichergestellt, dass kleine Schwankungen in der Verstelldynamik nicht als Rutscher interpretiert werden. Dadurch ist auch sichergestellt, dass, falls bei der Ermittlung der Ist-Gradienten ein Fehler auftritt oder ein hoher Rauschanteil vorliegt, dies nicht zu einer Rutscherkennung führt.

Überraschenderweise hat sich herausgestellt, dass eine weitere Möglichkeit, Rutschen in einem CVT-Getriebe, insbesondere einem Kegelscheibenumschlingungsgetriebe zu erkennen, in dessen akustischer Analyse liegt. Wenn an der Eingangs- und/oder Ausgangswelle unmittelbar an einer Kegelscheibe oder an einer mit einer Kegelscheibe in Körperschall übertragender Verbindung stehenden Stelle ein Sensor mit Empfindlichkeit im Frequenzbereich des Körperschalls und/oder Ultraschall angebracht wird, kann eine Schallkennlinie und/oder ein Schallkennfeld aufgenommen werden, das das Schallverhalten des Variators abhängig vom Schlupf bei verschiedenen übertragenen Drehmomenten und Anpressdrucken sowie gegebenenfalls unterschiedlichen Drehzahlen angibt. Ist das akustische Verhalten des Variators auf diese Weise bekannt und gespeichert, so kann aus einem augenblicklich gemessenen akustischen Parameter bzw. dessen Verlauf beispielsweise auf ein sich ankündigendes Rutschen geschlossen werden und diesem Rutschen durch Erhöhung des Anpressdrucks rechtzeitig entgegengewirkt werden, so dass Schäden vermieden werden können. Es versteht sich, dass bei Anbringung des Schallsensors unmittelbar an einer Kegelscheibe an sich bekannte berührungslose Signalübertagungstechniken eingesetzt werden.

*Bei den vorgenannten Verfahren zur Rutscherkennung steht für das Ergreifen von Gegenmaßnahmen gegen das Rutschen (beispielsweise Anhebung der Anpresskräfte der Kegelscheiben bei CVT-Getrieben mit elektronischer Steuerung) nur sehr wenig Zeit zur Verfügung oder ist es für eine vollständige Verhinderung des Rutschens zu spät, da für die Signalaufbereitung, beispielsweise Signalfilterung, eine gewisse Zeitdauer notwendig ist. Es ist daher wünschenswert, dass Information über bevorstehende Rutschereignisse bereits vor dem eigentlichen Rutschereignis vorliegt, damit beispielsweise die Anpresskraft rechtzeitig angehoben werden kann*

*Ein vorteilhaftes Verfahren zur frühzeitigen Rutscherkennung besteht darin, dass die zeitliche Änderung der Abtriebsdrehzahl $n_{Ab}$ ermittelt wird und als bevorstehendes Rutschereignis gewertet wird, wenn der Wert der zeitlichen Änderung einen vorbestimmten Grenzwert übersteigt. Bei zahlreichen Fahrzeugmessungen hat sich herausgestellt, dass einem Rutscherereignis im CVT-Getrieben beispielsweise infolge einer starken Bremsung oder einer ABS-Bremsung immer ein großer Wert der zeitlichen Ableitung der Abtriebsdrehzahl des Getriebes vorausgeht. Durch ein blockierendes bzw. abwechselnd rutschendes und nicht rutschendes Rad werden hohe dynamische Momente in den Triebstrang eingeleitet, die zu einem Rutschen des CVT-Getriebes führen, wenn nicht besondere Gegenmaßnahmen ergriffen werden. Ein Vorteil der Verwendung von $dn_{Ab}/dt$ zum Erkennen eines bevorstehenden Rutschens besteht nicht nur in der gewonnenen Reaktionszeit, sondern auch darin, dass der Grenzwert konstant ist oder allenfalls von der Art seiner Berechnung abhängt. Die Berechnung erfolgt vorteilhafterweise so, dass die zeitliche Änderung der Abtriebsdrehzahl über zwei oder drei in engem zeitlichen Abstand bestimmte Werte gemittelt wird. Diese Mittelwertbildung ist zweckmäßig, um die Streuung der ermittelten Werte der zeitlichen Änderung zu vermindern. In die Mittelung dürfen allerdings nicht zu viele Werte einbezogen werden, weil dann der Zeitvorteil der geschilderten Methode verlorengeht.*

*Mit dem Verfahren ist es möglich, bei CVT-Ge-*

trieben, deren Anpressung beispielsweise vollständig elektronisch geregelt wird bzw. die neben einem Momentenfühler zusätzliche Möglichkeiten (Elektromotor, Zusatzventile usw.) für eine elektronisch geregelte Anpassung besitzen, Gegenmaßnahmen zur Vermeidung von Rutschereignissen rechtzeitig zu ergreifen. Das Verfahren kann auch zur Vorsteuerung bei einer Schlupf gesteuerten/Schlupf geregelten Anpassung angewendet werden.

*Weiter ist es vorteilhaft, das Verfahren der Ermittlung der zeitlichen Änderung der Abtriebsdrehzahl mit dem weiter oben geschilderten Verfahren der Ermittlung der Änderungsgeschwindigkeit bzw. der zeitlichen Änderung der Übersetzung des CVT-Getriebes zu kombinieren. Das Verfahren kann ebenso wie die anderen Verfahren in unverzweigten und leistungsverzweigten Getrieben angewendet werden.*

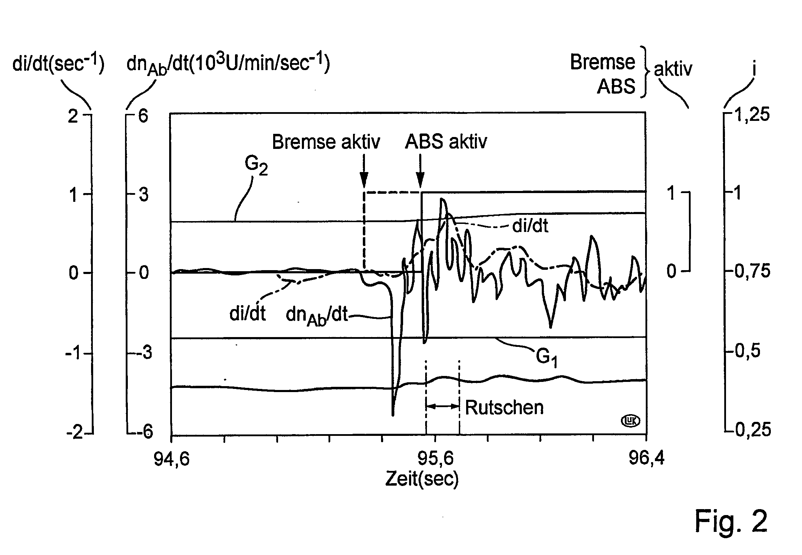

*Anhand der Figur 2 werden im folgenden die Vorteile des geschilderten Verfahrens erläutert: In Figur 2 ist auf der Waagerechten die Zeit im normalen Ablauf einer Messung aufgetragen, d. h. es sind Messergebnisse für den Zeitraum von 94, 6 Sekunden bis 96, 4 Sekunden dargestellt. Die Kurve di/dt gibt die zeitliche Änderung der Übersetzung i des C VT-Getriebes an. Die Kurve $dn_{Ab}/dt$ gibt die zeitliche Änderung der Abtriebsdrehzahl an. Der mit "Bremse aktiv" bezeichnete Pfeil gibt den Beginn einer Bremsung an. Der mit "ABS aktiv" bezeichnete Pfeil gibt den Beginn der Tätigkeit eines ABS Systems an. Der mit "Rutschen" bezeichnete waagerechte Doppelpfeil gibt den Zeitraum an, während dessen das CVT-Getriebe rutscht, wenn keine Gegenmaßnahmen ergriffen werden. Die Gerade $G_1$ gibt den Grenzwert an, der von den $dn_{Ab}/dt$ überschritten werden muss (Absolutwert), damit die hohe Verzögerung der Abtriebsdrehzahl als ein sich ankündigendes Rutschen des Getriebes gewertet wird. Die Kurve $G_2$ gibt den Grenzwert an, der von der zeitlichen Änderung der Übersetzung i des CVT-Getriebes überschritten werden muss, damit dies als Rutschen des CVT-Getriebes gewertet wird.*

*Wie ersichtlich, überschreitet $dn_{Ab}/dt$ den zulässige Grenzwert $G_1$ bereits deutlich vor dem Auftreten des Rutschens (und dann nochmals zu Beginn des Rutschens), wohingegen di/dt den zulässige Grenzwert $G_2$ erst überschreitet, wenn das Getriebe bereits rutscht. Die Zeitspanne von etwa 150 ms, die zwischen dem Erkennen eines sich an kündigenden Rutschens und dem tatsächlichen Rutschen liegt, reicht, um durch geeignete Gegenmaßnahmen das Rutschen zu vermeiden. Typische Werte von $G_1$ liegen beispielsweise zwischen bei 1500 bis 2000 U/min/s.*

*Bei einem weiteren Verfahren zur Früherkennung eines Rutschens eines CVT-Getriebes wird der Änderungsgeschwindigkeit des Bremsdruckes gemessen, der einem Rad zugeführt wird, oder, bei anderer Betätigung der Bremse die Bremskraft, mit der die Bremse betätigt wird. Übersteigt die zeitliche Änderung einer dieser Größen bestimmten Grenzwerte, so kön-*

*nen ähnliche Maßnahmen zur Vermeidung des Rutschens des CVT-Getriebes getroffen werden, wie bei dem vorgeschilderten Verfahren der Ermittlung der zeitlichen Änderung der Abtriebsdrehzahl.*

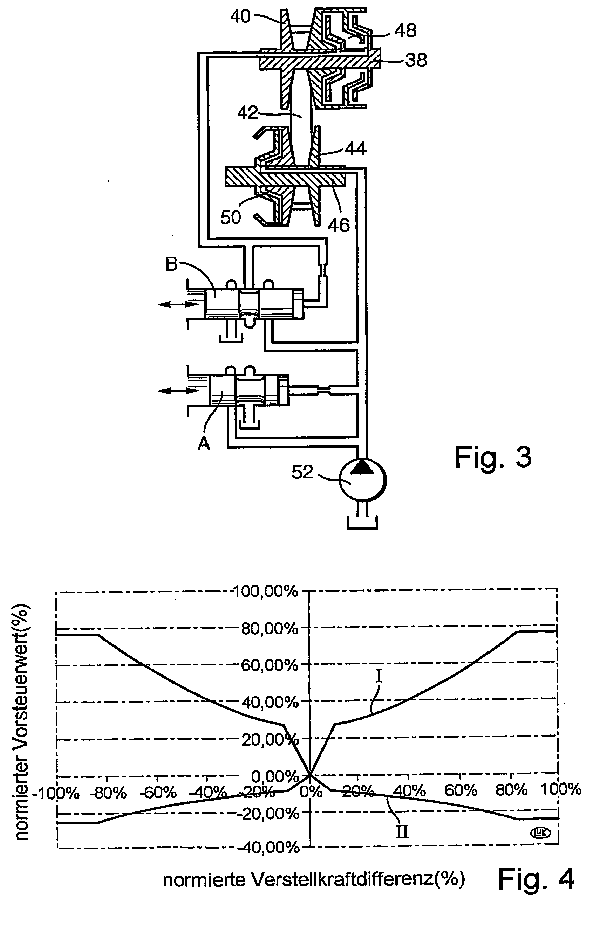

Fig. 3 zeigt schematisch eine hydraulischen Ansteuerung eines CVT-Getriebes.

Eine Eingangswelle 38 treibt ein erstes Kegelscheibenpaar 40 an, das über ein Umschlingungsmittel 42 reibschlüssig mit einem zweiten Kegelscheibenpaar 44 verbunden ist, das eine Ausgangswelle 46 antreibt. Zur Anpressung zwischen den Kegelscheiben jedes Kegelscheibenpaares und dem Umschlingungsmittel 42 und zur Einstellung des Abstandes zwischen den Kegelscheiben jedes Kegelscheibenpaares bzw. der Übersetzung des Kegelumschlingungsgetriebes ist jedem Kegelscheibenpaar ein Druckraum 48 bzw. 50 zugeordnet, der über Druckleitungen und Ventile mit einer Pumpe 52 verbunden ist.

Bei der Ausführungsform gemäß Fig. 3 steuert ein Ventil A den Druck, der am Kegelscheibenpaar 42 anliegt. Ein Ventil B steuert den Druck, der am eingangsseitigen Kegelscheibenpaar 40 anliegt. Damit ist mit dem Ventil A die Anpresskraft steuerbar, während zusammen mit dem Ventil B die Verstellung der Übersetzung erfolgt. Die Ventile werden vom Steuergerät 18 her (Fig. 1) gesteuert.

Der in den Druckräumen 48 und 50 aufgebaute Druck muss jederzeit so groß sein, dass Rutschfreiheit zwischen dem Umschlingungsmittel 52 und den Kegelscheibenpaaren gewährleistet ist. Gleichzeitig müssen zwischen den Scheibenpaaren Druckdifferenzen eingestellt werden, um die jeweils gewünschte Übersetzung einzustellen.

Bei der Übersetzungsverstellung verändert sich durch axiale Bewegung jeweils einer Kegelscheibe das Volumen des jeweiligen Druckraums. Ein Problem resultiert daraus, dass bei einer Druckänderung, die aufgrund einer Veränderung des zu übertragenden Drehmoments erforderlich ist, ohne Übersetzungsverstellung nahezu kein Hydraulikmittel- bzw. Ölvolumen bewegt wird, wohingegen bei einer Übersetzungsverstellung je nach gewünschter Verstellgeschwindigkeit hohe Volumenströme fließen. Druckänderungen sind auf diese Weise mit außerordentlich verschiedenen Volumenströmen bzw. einem außerordentlich verschiedenen Streckenverhalten des Variators verbunden.

Der vom Drehmoment abhängige Anpressdruck ist durch ein dem jeweiligen Variator entsprechendes Anpressgesetz gegeben. Der für das Halten oder Einstellen einer gewünschten Übersetzung erforderliche Verstelldruck wird von einem Übersetzungsregler geliefert. Aus den in jedem der Druckräume wirksamen Verstelldrücken lässt sich über die Geometriebedingungen der Druckräume eine Verstellkraft ermitteln. Die Differenz der Verstellkräfte ist ein gutes Maß für die sich einstellende Verstellgeschwindigkeit und damit für den notwendigen Volumenstrom.

Benutzt man parallel zum eigentlichen Druckregler eine Vorsteuerung, die das Ventil bzw. die Ventile abhängig von der Verstellkraftdifferenz bzw. der Verstelldruckdifferenz mehr oder weniger öffnet, so kann das veränderliche Streckenverhalten kompensiert werden.

Die Vorsteuerung erfolgt in der Regelsoftware, Sie ist eine Vorsteuerung des Druckregelkreises im Sinne einer Störgrößenaufschaltung.

Eine solche Vorsteuerung ist vorteilhaft für alle Scheibenartkonstruktionen, bei denen mit nur einer Druckkammer je Scheibensatz bzw. Scheibenpaar gearbeitet wird. In Abänderung der Ausführungsform gem. Fig. 2 sind auch Einzelansteuerungen jedes Scheibensatzes mit je einem Ventil möglich.

In Fig. 4 ist ein Zusammenhang zwischen dem Vorsteuerwert und der Verstellkraftdifferenz in normierter Form dargestellt. Eine negative Verstellkraftdifferenz entspricht einer Übersetzungsverstellung in Richtung underdrive, eine positive in Richtung overdrive. Die Verstellkraftdifferenz wird vom Übersetzungsregler geliefert; aus den Kennlinien kann der Vorsteuerwert ermittelt werden, entsprechend dem das Vorsteuerventil geöffnet wird. Die Kennlinie I ist dem Scheibenpaar 40, die Kennlinie II dem Scheibenpaar 42 zugeordnet.

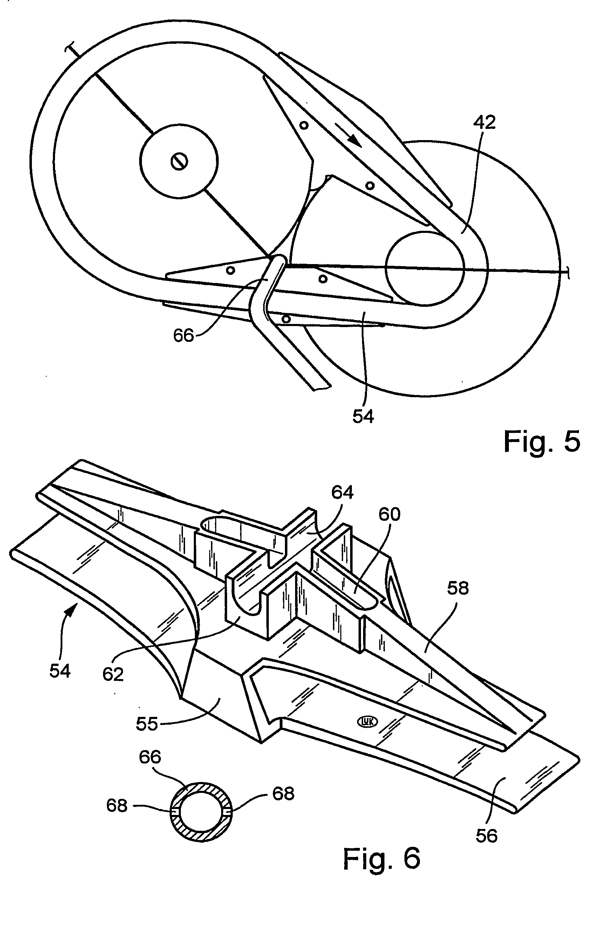

Für eine einwandfreie Langzeitfunktion eines Kegelscheibenumschlingungsgetriebes ist eine gute Beölung der Kegelflächen der Kegelscheibenpaare wichtig. Fig. 5 und 6 zeigen eine Lösung dieses Problems:

Gemäß Fig. 5, die eine Seitenansicht eines Kegelscheibenumschlingungsgetriebes mit jeweils einer abgenommenen Kegelscheibe zeigt, läuft das Umschlingungsmittels 42, das die beiden Kegelscheibenpaare umschlingt, längs einer Führungs- bzw. Gleitschiene 64, die in an sich bekannter Weise derart gelagert ist, dass unabhängig von der jeweiligen Übersetzung das Lostrum in sicherer Anlage an der Gleitschiene 54 läuft.

Gemäß Fig. 6, die eine Perspektivansicht zeigt, weist die Gleitschiene 54 zwei über einen Steg 55 verbundene Gleitplatten auf, die zwischen sich einen Führungskanal 56 bilden, in dem das Umschlingungsmittel, beispielsweise eine Metallkette, läuft. Zu ihrer mechanischen Verstärkung ist die Gleitschiene 54 auf ihrer dem anderen Trum des Umschlingungsmittels zugewandten Seite mit einer Rippe 58 versehen, deren Dicke von den Enden der Gleitschiene aus zur Mitte hin zunimmt. Zumindest im Bereich der Mitte weist die Rippe 58 parallel zu ihrer Längserstreckung eine Nut 60 auf, deren Tiefe im Bereich der Mitte der Rippe 58 maximal ist. Im Bereich der Nut 60 hat die Rippe, wie aus Fig. 6 ersichtlich, Y-förmigen Querschnitt. Quer zur Nut 60 verläuft durch die Rippe 58 und einen zusätzlichen Verstärkungsansatz 62 hindurch ein Kanal 64, der ein Spritzrohr 66 (in der Perspektivansicht nicht dargestellt) aufnimmt, das im Bereich der Nut 60 mit Abspritzlöchern 68 (s. kleine Querschnittsansicht) ausgebildet ist. Die Nut 60 bzw. deren Grund ist derart geformt, dass aus den Abspritzlöchern abgespritztes Öl, das zur Kühlung und Schmierung des Kegelscheibenumschlingungsgetriebes dient, unabhängig von der jeweiligen Übersetzung unmittelbar in die Räume zwischen den Kegelscheiben und auf die Wellen der Kegelscheibenpaare gelangt. Vorteilhafterweise sind zusätzliche Löcher vorhanden, aus denen Öl auf das gegenüberliegende Trum gespritzt wird.

Es versteht sich, dass die beschriebene Konstruktion in vielfältiger Weise abgeändert werden kann, solange nur sichergestellt ist, dass ständig Öl in die Zwischenräume zwischen den Kegelscheibenpaaren gelangt. Beispielsweise kann der Kanal 64 geschlossen sein, so dass er unmittelbar das Spritzrohr bildet und mit Abspritzlöchern ausgebildet ist. Ist in diesem Fall ist eine Hydraulikleitung an den Kanal angeschlossen.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbstständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbstständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

**Patentansprüche**

1. Verfahren zum Feststellen des Rutschens eines CVT-Getriebes, bei welchem Verfahren

   - die zeitliche Änderung der Abtriebsdrehzahl des Getriebes ermittelt wird und

   - als sich zumindest ankündigendes Rutschen gewertet wird, wenn die zeitliche Änderung der Abtriebsdrehzahl einen vorbestimmten Grenzwert übersteigt.

2. Verfahren zum Feststellen des Rutschens eines CVT-Getriebes, bei welchem Verfahren

   - die zeitliche Änderung der auf wenigstens eine der Radbremsen eines mit dem CVT- Getriebe versehenen Fahrzeugs wirkende Kraft ermittelt wird und

   - als sich zumindest ankündigendes Rutschen gewertet wird, wenn die zeitliche Änderung der Kraft einen vorbestimmten Grenzwert übersteigt.

3. Verfahren nach einem der Ansprüche 1 oder 2, wobei bei Feststellung eines Rutschens oder eines sich ankündigenden Rutschens eine Stellgröße des CVT-Getriebes derart verstellt wird, dass einem Rutschen entgegengewirkt wird.

4. Verfahren zur Steuerung eines CVT-Getriebes nach einem der Ansprüche 1 bis 3, mit einem zwei Kegelscheibenpaare umschlingenden Umschlingungsmittel, wobei jedes Kegelscheibenpaar einen einzigen mit Fluiddruck beaufschlagten Druckraum zur Einstellung des Anpressdruckes zwischen dem Kegelscheibenpaar und dem Umschlingungsmittel sowie zur Übersetzungsverstellung des CVT-Getriebes aufweist, bei welchem Verfahren der Öffnungsquerschnitt eines in den Fluidanschlussleitungen der Druckräume enthaltenen Steuerventils abhängig von einer für eine vorbestimmte Änderungsgeschwindigkeit der Übersetzung erforderlichen Differenz zwischen den in den Druckräumen herrschenden Fluiddrucken vorgesteuert wird.

5. Kegelscheibenumschlingungsgetriebe nach einem der Ansprüche 1 bis 4, enthaltend
   zwei Kegelscheibenpaare mit je zwei, in ihrem Abstand veränderbaren Kegelscheiben und einem die Kegelscheiben umschlingenden Umschlingungsmittel, einer ein Trum des Umschlingungsmittels führenden Gleitschiene, die auf ihrer dem anderen Trum zugewandten Seite wenigstens eine parallel zu dem Umschlingungsmittel verlaufende, sich von den ändernde Gleitschiene zu deren Mitte verdikkende Rippe aufweist, und

ein im Bereich der Mitte der Rippe angeordnetes, etwa senkrecht zu einer Ebene, in der das Umschlingungsmittel umläuft, verlaufendes Rohr zum Sprühen von Flüssigkeit wenigstens in die Räume zwischen den Kegelscheiben der Kegelscheibenpaare, wobei

die Rippe an ihrer dem anderen Trum zugewandten Oberfläche im Bereich ihrer Mitte eine Nut derart aufweist, dass aus in dem die Nut durchquerenden Rohr ausgebildeten Löchern abgespritzte Flüssigkeit unmittelbar in die Räume zwischen den Kegelscheiben gelangt.

6. Kegelscheibenumschlingungsgetriebe nach Anspruch 5, wobei aus wenigstens einem weiteren, in dem Rohr ausgebildeten Loch abgespritzte Flüssigkeit unmittelbar auf das andere Trum gelangt.

7. Verfahren nach einem der Ansprüche 1 bis 6, **dadurch gekennzeichnet, dass** bei einem erkannten Rutscherereignis eine Bewertung bezüglich einer Schädigung des Kegelscheibenumschlingungsmittels erfolgt.

8. Verfahren nach Anspruch 7, **dadurch gekennzeichnet, dass** in Abhängigkeit der Bewertung Maßnahmen zum weiteren Betrieb eingeleitet werden.

9. Verfahren nach Anspruch 7 oder 8, **dadurch gekennzeichnet, dass** die Bewertung der Schädigung als Messung der Leistung eines Rutschereignisses erfolgt.

Fig. 1

Fig. 2

di/dt(sec$^{-1}$)  dn$_{Ab}$/dt($10^3$U/min/sec$^{-1}$)

Bremse $\big\}$ aktiv
ABS $\big\}$

i

2 — 6 — 1,25

Bremse aktiv    ABS aktiv

G$_2$

1 — 3 — 1 — 1

di/dt

0 — 0 — 0,75

di/dt    dn$_{Ab}$/dt

-1 — -3 — 0,5

G$_1$

Rutschen

-2 — -6 — 0,25

94,6                95,6                96,4

Zeit(sec)

EP 1 605 191 A2

Fig. 3

Fig. 4

normierte Verstellkraftdifferenz(%)

Fig. 5

Fig. 6